# EUROPEAN PATENT APPLICATION

(11) **EP 4 804 288 A1**
(43) Date of publication of application: **09.09.2026**
(21) Application number: 23959943.4
(22) Date of filing: 01.12.2023
(51) Int. Cl.: H01M 10/48, G01N 29/04

(54) **BATTERY CELL AND BATTERY PACK CAPABLE OF BEING TESTED IN SITU, SYSTEM, AND BATTERY MONITORING METHOD**

(71) Applicant: Suzhou Zing Technology Co., Ltd., Suzhou, Jiangsu 215000 (CN)
(72) Inventor: XU, Chundong, Suzhou, Jiangsu 215000 (CN)
(74) Representative: Osterhoff, Utz
(86) International application number: PCT/CN2023/135860
(87) International publication number: WO 2025/112036

(57) **Abstract**

The present application discloses a battery cell and a battery pack capable of monitoring in situ, a system and a battery monitoring method, relating to the technical field of battery safety. The battery cell includes a protective shell and an internal component provided inside the protective shell. The internal component includes: a battery winding mandrel; an ultrasonic transducer module adhered to a surface of the battery winding mandrel by winding; and a battery jelly roll layer adhered to a surface of the ultrasonic transducer module by winding. The ultrasonic transducer module is configured for transmitting an ultrasonic transmitting signal and receiving an ultrasonic reflecting echo to perform ultrasonic detection, so as to conduct real-time in-situ detection on the battery cell through the ultrasonic detection. Based on the technical solution provided by the present application, the ultrasonic detection implemented by the ultrasonic transducer module inside the battery cell can realize real-time in-situ detection on the battery cell in service, so as to avoid risks caused by spontaneous explosion of the battery.

## Description

### TECHNICAL FIELD

The present application relates to the technical field of battery safety, and in particular to a battery cell and a battery pack capable of monitoring in situ, a system and a battery monitoring method.

### BACKGROUND

A power battery is a widely used component, especially in the fields of new energy vehicles and large-scale energy storage, the power battery has become a core component. With the popularization of power battery applications, the safety issue of power batteries has attracted much attention.

Spontaneous combustion of power batteries is a major factor affecting the safety of power batteries. Spontaneous combustion is basically caused by short circuit of the battery due to breakdown of the separator, resulting in a large amount of heat generation and combustion in a short time. Although the probability of spontaneous combustion of batteries can be reduced by improving the safety design standards of batteries, it is still difficult to fundamentally avoid spontaneous combustion of batteries.

Therefore, it is urgent to provide a technical solution that can monitor the working state of power batteries in real time and improve the safety of power batteries.

### SUMMARY

The purpose of the present application is to provide a battery cell and a battery pack capable of monitoring in situ, a system and a battery monitoring method, which can conduct real-time in-situ detection on the battery cell.

To achieve the purpose of the present application, the present application provides the following technical solutions:
in one aspect, a battery cell capable of monitoring in situ is provided, the battery cell includes a protective shell and an internal component provided inside the protective shell, and the internal component includes:
a battery winding mandrel;
an ultrasonic transducer module adhered to a surface of the battery winding mandrel by winding;
a battery jelly roll layer adhered to a surface of the ultrasonic transducer module by winding;
where the ultrasonic transducer module is configured for transmitting an ultrasonic transmitting signal and receiving an ultrasonic reflecting echo to perform ultrasonic detection, so as to conduct real-time in-situ detection on the battery cell through the ultrasonic detection.

In an embodiment, the ultrasonic transducer module includes a plurality of ultrasonic transducers forming a multi-channel array structure.

In an embodiment, the array structure includes: a linear array structure or a planar array structure.

In an embodiment, the ultrasonic transducer module includes a single ultrasonic transducer.

In an embodiment, the ultrasonic transducer includes the following layers connected in sequence from bottom to top:
a base layer configured for being attached to the surface of the battery winding mandrel and carrying a piezoelectric material layer;
the piezoelectric material layer configured for radiating the ultrasonic transmitting signal outwards and receiving the ultrasonic reflecting echo;
an acoustic matching layer configured for reducing an acoustic impedance difference between the piezoelectric material layer and the battery jelly roll layer; and
a sealing layer configured for packaging and protecting the ultrasonic transducer.

In an embodiment, a thickness of the piezoelectric material layer is 1 um to 1000 um00so that a frequency of the ultrasonic transmitting signal is 0.5 MHz to 50 MHz.

In an embodiment, one end of the battery winding mandrel is led out with a flexible printed circuit board connected to the ultrasonic transducer module, an intelligent chip is mounted on the flexible printed circuit board and is powered by the battery cell, and the intelligent chip is configured as a driving unit and an imaging unit of the ultrasonic transducer module.

In an embodiment, the intelligent chip includes:
a front-end transceiver module configured for exciting the ultrasonic transducer module to transmit the ultrasonic transmitting signal, and receiving and processing the ultrasonic reflecting echo;
a beam control module configured for performing time delay control and forming the ultrasonic reflecting echo into a gray matrix;
an image processing module configured for performing image processing according to the gray matrix and identifying abnormal information in the battery cell;
a main control module configured for logically controlling the intelligent chip;
a communication module configured for managing a communication interface of the intelligent chip; and
a power management module configured for voltage management.

In an embodiment, a winding form corresponding to the winding includes:
cylindrical; or
cubical; or
oval.

In another aspect, a battery pack capable of monitoring in situ is provided, the battery pack includes a plurality of battery cells according to the above aspect, and intelligent chips of each of the plurality of battery cells are connected through a communication bus.

In another aspect, an early warning system is provided, the early warning system is connected to the battery pack according to the above aspect, and the early warning system is configured for supporting prompting a risk battery cell in the battery pack, and the risk battery cell is a battery cell with abnormal information detected by real-time in-situ detection through ultrasonic detection.

In another aspect, a battery monitoring method is provided, the method is applied to the battery cell according to the above aspect, and the method includes:
transmitting an ultrasonic transmitting signal through an ultrasonic transducer module to scan an inside of the battery cell;
receiving an ultrasonic reflecting echo generated after scanning through the ultrasonic transducer module;
transmitting the ultrasonic reflecting echo to an intelligent chip corresponding to the ultrasonic transducer module through the ultrasonic transducer module; and
performing analysis on the ultrasonic reflecting echo through the intelligent chip to identify abnormal information in the battery cell.

In an embodiment, the abnormal information includes:
a height of an abnormal point in the battery cell; and/or
an orientation of the abnormal point in the battery cell.

In an embodiment, the intelligent chip is correspondingly provided with a location address code; and
the method further includes:
reporting an ultrasonic scanning identification result through the intelligent chip, where the ultrasonic scanning identification result carries a location address code and the abnormal information in the battery cell.

In an embodiment, the battery cell has a battery risk level;
the reporting of the ultrasonic scanning identification result through the intelligent chip includes:
the reporting the ultrasonic scanning identification result through the intelligent chip includes:
reporting the ultrasonic scanning identification result through the intelligent chip according to an information reporting frequency corresponding to a current battery risk level.

In an embodiment, the battery risk level is determined based on at least one of the following information:
a current number of abnormal points in the battery cell;
a current size of abnormal points in the battery cell;
a change trend of a number of abnormal points in the battery cell; and
a change trend of a size of abnormal points in the battery cell.

Compared with the prior art, the present application has the following beneficial effects:
the ultrasonic transducer is wound on the surface of the battery winding mandrel, and the battery jelly roll layer is wound on the surface of the ultrasonic transducer, so that the ultrasonic transducer module and the battery can be packaged and used together. Due to the characteristics of nondestructive penetration detection, high resolution, low cost and long service life of ultrasonic waves, the ultrasonic detection technology implemented by the ultrasonic transducer module inside the battery cell can realize real-time in-situ detection on the battery cell in service, so as to avoid risks caused by spontaneous explosion of the battery.

### BRIEF DESCRIPTION OF THE DRAWINGS

FIG. 1 is a schematic structural diagram of a battery cell according to an embodiment of the present application.
FIG. 2 is a schematic structural diagram of the battery cell according to an embodiment of the present application.
FIG. 3 is a schematic structural diagram of the battery cell according to an embodiment of the present application.
FIG. 4 is a schematic structural diagram of the battery cell according to an embodiment of the present application.
FIG. 5 is a schematic diagram of an ultrasonic reflecting echo according to an embodiment of the present application.
FIG. 6 is a schematic diagram of the ultrasonic reflecting echo according to an embodiment of the present application.
FIG. 7 is a schematic diagram of the ultrasonic reflecting echo according to an embodiment of the present application.
FIG. 8 is a schematic structural diagram of an ultrasonic transducer module with a linear array structure according to an embodiment of the present application.
FIG. 9 is a schematic winding diagram of the ultrasonic transducer module with the linear array structure according to an embodiment of the present application.
FIG. 10 is a schematic structural diagram of an ultrasonic transducer module with a planar array structure according to an embodiment of the present application.
FIG. 11 is a schematic winding diagram of the ultrasonic transducer module with the planar array structure according to an embodiment of the present application.
FIG. 12 is a schematic structural diagram of an ultrasonic transducer according to an embodiment of the present application.
FIG. 13 is a schematic structural diagram of the battery cell according to an embodiment of the present application.
FIG. 14 is a schematic diagram of signal propagation inside the battery cell according to an embodiment of the present application.
FIG. 15 is a schematic diagram of a battery cell connected to an intelligent chip according to an embodiment of the present application.
FIG. 16 is a schematic diagram of the battery cell connected to the intelligent chip according to an embodiment of the present application.
FIG. 17 is a schematic structural diagram of the intelligent chip according to an embodiment of the present application.
FIG. 18 is a schematic structural diagram of a battery pack according to an embodiment of the present application.
FIG. 19 is a schematic diagram of an early warning system connected to the battery cell according to an embodiment of the present application.
FIG. 20 is a schematic diagram of prompt display performed by the early warning system according to an embodiment of the present application.
FIG. 21 is a method flow chart of a battery monitoring method according to an embodiment of the present application.
FIG. 22 is a schematic diagram of a sound field of an ultrasonic transducer module according to an embodiment of the present application.
FIG. 23 is a schematic diagram of an ultrasonic scanning result of a battery cell according to an embodiment of the present application.
FIG. 24 is a schematic diagram of the ultrasonic scanning result of the battery cell according to an embodiment of the present application.
FIG. 25 is a schematic diagram of the ultrasonic scanning result of the battery cell according to an embodiment of the present application.
FIG. 26 is a schematic diagram of the ultrasonic scanning result of the battery cell according to an embodiment of the present application.
FIG. 27 is a schematic diagram of the ultrasonic scanning result of the battery cell according to an embodiment of the present application.
FIG. 28 is a schematic diagram for locating a risk battery cell according to an embodiment of the present application.
FIG. 29 is a schematic diagram of a battery risk level according to an embodiment of the present application.

### DETAILED DESCRIPTION OF THE EMBODIMENTS

To make the purpose, technical solution and advantages of the present application clearer, the technical solution in the embodiments of the present application will be clearly and completely described below with reference to the accompanying drawings in the embodiments of the present application. Obviously, the described embodiments are only part of the embodiments of the present application, not all of them. Based on the embodiments of the present application, all other embodiments obtained by those skilled in the art without creative efforts shall fall within the scope of the present application.

In the description of the present application, it should be understood that the terms indicating orientation or positional relationship such as "vertical", "upper", "lower", "top", "side", "inner" and "outer" are based on the orientation or positional relationship shown in the accompanying drawings, which are only for the convenience of describing the present application and simplifying the description, and do not indicate or imply that the referred device or element must have a specific orientation, be constructed and operated in a specific orientation, and thus should not be construed as limiting the present application. In addition, the terms "first" and "second" are only configured for descriptive purposes and should not be construed as indicating or implying relative importance or implicitly indicating the number of indicated technical features. Thus, a feature defined as "first" or "second" may explicitly or implicitly include one or more of such features. In the description of the present application, unless otherwise specified, "a plurality of" means two or more.

In the description of the present application, it should be noted that the terms "installation", "connection" and "communication" should be understood in a broad sense unless otherwise clearly specified and limited. For example, they may be fixed connection, detachable connection or integral connection; they may be mechanical connection or electrical connection; they may be direct connection or indirect connection through an intermediate medium, and they may be the internal communication of two elements. Those skilled in the art can understand the specific meaning of the above terms in the present application according to specific situations.

According to the statistics of the Ministry of Emergency Management of the People's Republic of China, the spontaneous combustion rate of new energy vehicles in China is 0.7 per ten thousand, with an average of about eight new energy vehicles spontaneously combusting every day. With the popularization of new energy vehicles, the number of spontaneous combustion of power batteries will further increase. Therefore, the problem of avoiding the threat of battery spontaneous combustion to life has attracted much attention.

To avoid the above problems, in the embodiments of the present application, a technology capable of monitoring the working state of a power battery in real time is provided. The battery body is configured for power supply, and the internal structure and spontaneous combustion state of the battery are determined and warned in advance through an ultrasonic transducer, prompting battery replacement or emergency escape.

The embodiment of the present application provides a battery cell capable of monitoring in situ (hereinafter referred to as battery cell), which includes a protective shell and an internal component provided inside the protective shell.

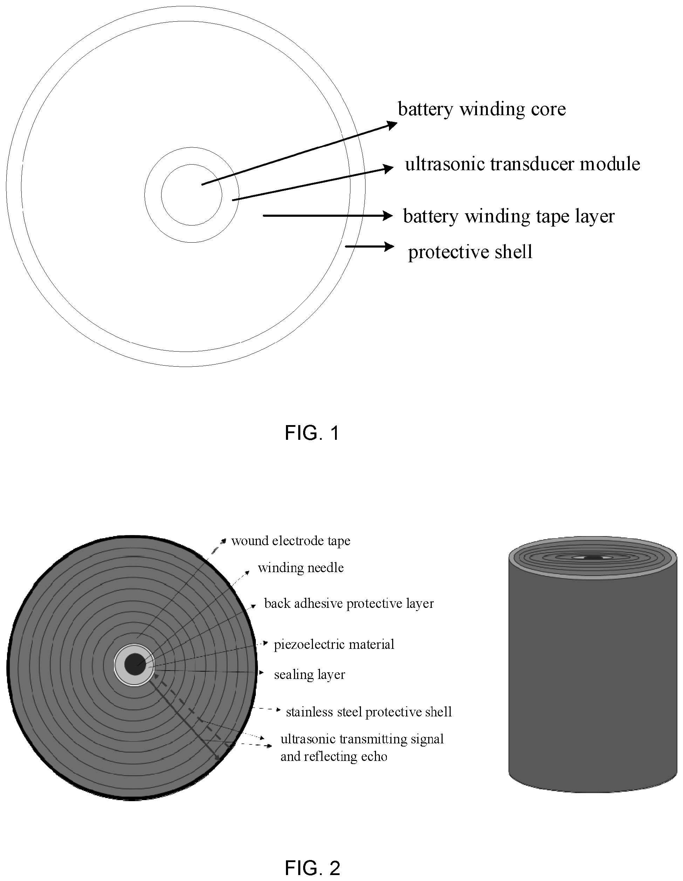

In the embodiment of the present application, as shown in FIG. 1, the internal component includes: a battery winding mandrel; an ultrasonic transducer module adhered to the surface of the battery winding mandrel by winding; and a battery jelly roll layer adhered to the surface of the ultrasonic transducer module by winding. The ultrasonic transducer module is configured for transmitting ultrasonic transmitting signals and receiving ultrasonic reflecting echoes to perform ultrasonic detection, so as to conduct real-time in-situ detection on the battery cell through ultrasonic detection.

In the embodiment of the present application, the ultrasonic transducer module is packaged and used together with the battery. Due to the characteristics of nondestructive penetration detection, high resolution, low cost and long service life of ultrasonic waves, the ultrasonic detection technology implemented by the ultrasonic transducer module can realize real-time in-situ detection, timely diagnosis and early warning of potential safety hazards for the battery in service, so as to avoid risks caused by spontaneous explosion of the battery to life. The battery cell in the embodiment of the present application may be an electrolyte battery or a solid-state battery. Compared with the electrolyte battery, the solid-state battery only changes the electrolyte from liquid ion transport to solid ion transport, and the ultrasonic transducer module can still be packaged inside the battery cell for real-time in-situ safety monitoring.

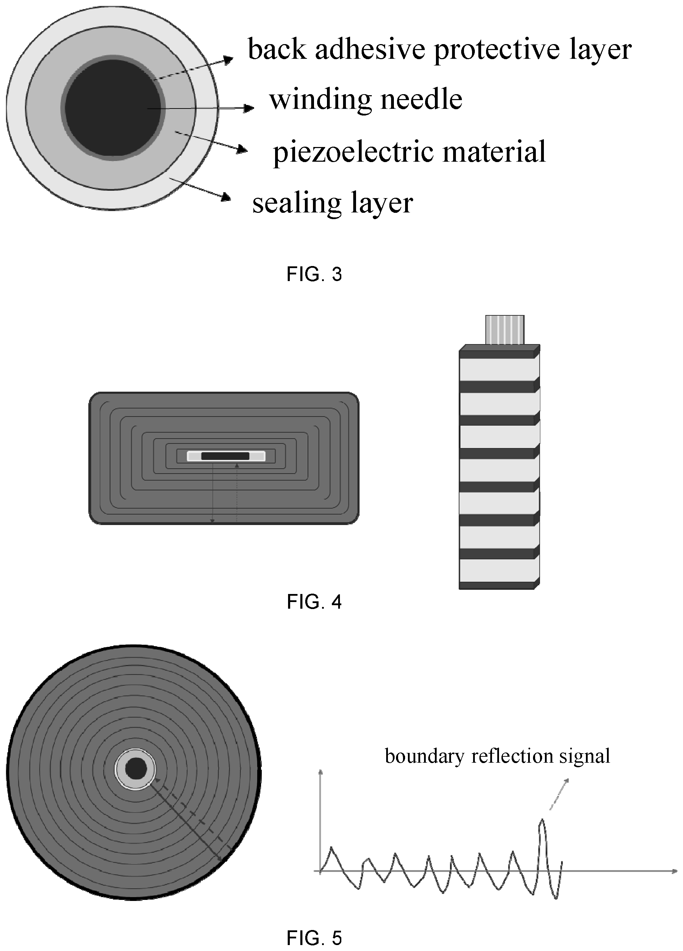

Specifically, as shown in FIG. 2 and FIG. 3, the ultrasonic transducer module is provided in the central part of the whole battery cell, assembled with the battery winding mandrel, transmits ultrasonic transmitting signals to the periphery of the battery through the coupling of electrolyte/solid electrolyte, and performs real-time imaging through the ultrasonic reflecting echoes of the battery jelly roll layer. Since ultrasonic detection is less affected by temperature and working state, it can not only monitor the internal compactness state during the production of battery cells, but also more importantly, conduct in-situ real-time detection and monitoring for the entire service life cycle of battery cells.

The ultrasonic transducer module can adopt a flexible and bendable design to be wound on the surface of the battery winding mandrel, and then wound inside the battery cell together with the battery jelly roll layer.

In an embodiment, the corresponding winding form includes: cylindrical; or cubical; or oval.

In this embodiment, the battery cell can have different winding forms. In addition to cylindrical batteries, there are cubical batteries, oval batteries, polymer batteries, etc., all of which can adopt the present solution for real-time in-situ safety monitoring. For example, as shown in FIG. 4, it shows a battery cell adopting a cylindrical winding form.

In an embodiment, the ultrasonic transducer module includes a single ultrasonic transducer.

In this embodiment, the internal state of the battery cell can be monitored by receiving ultrasonic reflecting echoes through a single ultrasonic transducer and comparing the waveform of the current ultrasonic reflecting echoes with the waveform of the ultrasonic reflecting echoes in a normal state.

The principle of real-time monitoring by the ultrasonic transducer module is as follows: if bubbles, bulges and lithium metal dendrites appear inside the battery cell due to abnormal states such as overcharge, strong ultrasonic reflecting echoes will be generated according to the propagation theory of ultrasonic waves under acoustic impedance mismatch, and the states of bubbles and lithium metal dendrites can be monitored in real time after being transmitted to the ultrasonic transducer module, and battery safety early warning and prompt for battery replacement or maintenance will be given when the limit value is reached.

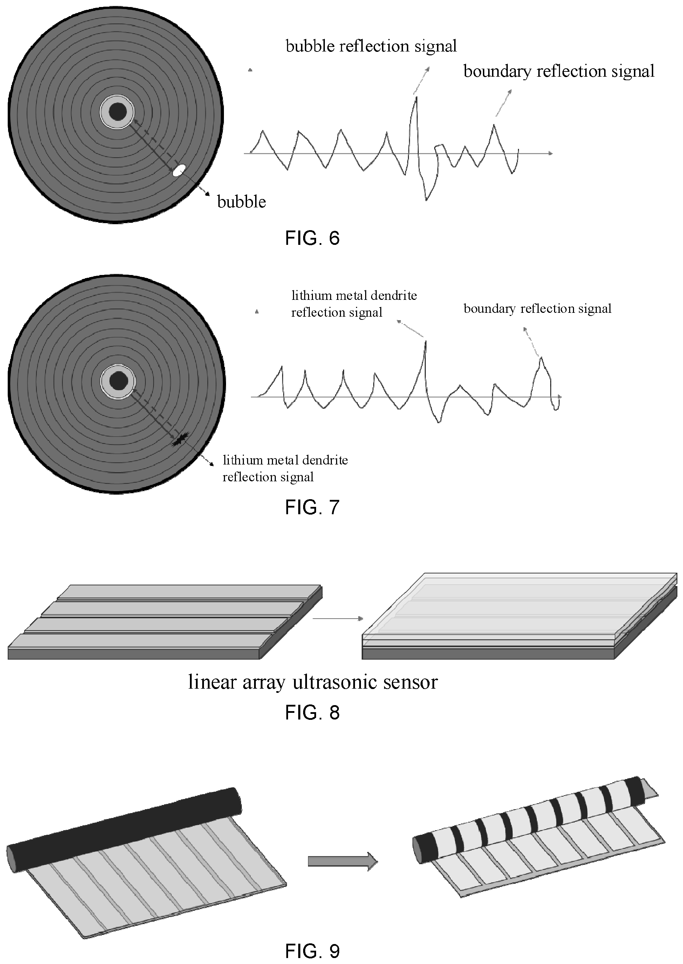

For example, FIG. 5 shows the signal state of ultrasonic reflecting echoes when the battery cell is in a normal state; FIG. 6 shows the signal state of ultrasonic reflecting echoes when there are bubbles in the battery cell, with obvious bubble reflection signals in the echoes; and FIG. 7 shows the signal state of ultrasonic reflecting echoes when there are lithium metal dendrites in the battery cell, with obvious lithium metal dendrite reflection signals in the echoes. It can be understood that the signal waveforms in FIG. 5 to FIG. 7 are only examples, and the present application is not limited thereto. For example, the reflection signals corresponding to bubbles/lithium metal dendrites in the battery cell may be much larger or smaller than the conventional boundary reflection signals.

In an embodiment, the ultrasonic transducer module includes a plurality of ultrasonic transducers, and the plurality of ultrasonic transducers form a multi-channel array structure.

In this embodiment, since the ultrasonic transducer module is wound inside the battery cell, the ultrasonic transducer module can adopt a multi-channel array structure to realize the imaging function, and the internal part of the ultrasonic cell can be monitored more clearly through the imaging function.

In an embodiment, the array structure includes: a linear array structure or a planar array structure.

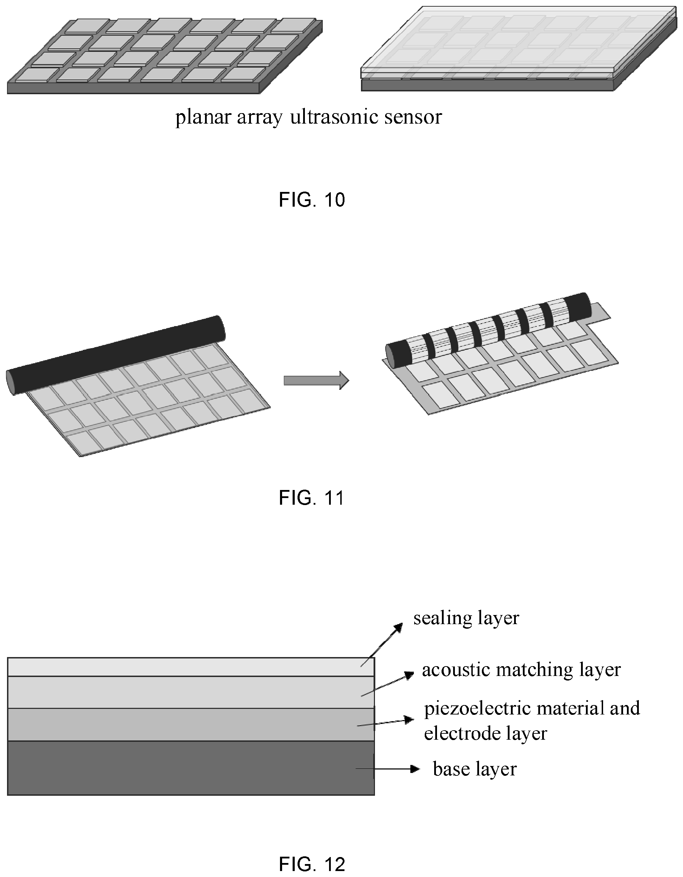

In this embodiment, two different array arrangement modes of the ultrasonic transducer module are provided, one is a linear array structure as shown in FIG. 8 and FIG. 9, and the other is a planar array structure as shown in FIG. 10 and FIG. 11. The linear array structure includes m rows of ultrasonic transducers, and the planar array structure includes m rows multiplying n columns of ultrasonic transducers.

In an embodiment, the structure of each ultrasonic transducer in the ultrasonic transducer module is as follows, including the following layers connected in sequence from bottom to top: a base layer configured for being attached to the surface of the battery winding mandrel and carrying the piezoelectric material layer; a piezoelectric material layer configured for radiating the ultrasonic transmitting signals outwards and receiving the ultrasonic reflecting echoes; an acoustic matching layer configured for reducing the acoustic impedance difference between the piezoelectric material layer and the battery jelly roll layer; and a sealing layer configured for packaging and protecting the ultrasonic transducer.

In this embodiment, as shown in FIG. 12, the base layer, piezoelectric material layer, acoustic matching layer and sealing layer are combined to form an effective ultrasonic transducer element, which can emit ultrasonic waves outwards under high-voltage driving, and can also receive reflected ultrasonic reflecting echoes to detect the battery cell through the ultrasonic reflecting echoes.

Specifically, the characteristics and functions of each functional layer of the ultrasonic transducer are as follows:
(1) base layer: one side carries the piezoelectric material layer, and the other side is attached to the surface of the battery winding mandrel. It needs to suppress the backscattering signal when the piezoelectric material is excited. Flexible and high-temperature resistant polymer materials that can be bent are generally selected, such as high-temperature resistant polyester (PET) film, high-temperature polyimide (PI) film material, polyether ether ketone (PEEK) film, etc. Metal materials such as stainless steel can also be used. The suitable thickness is less than 0.2mm.
(2) Piezoelectric material layer: the piezoelectric material layer is the core layer of the ultrasonic transducer, and will radiate ultrasonic transmitting signals outwards under the excitation of high-voltage pulses.

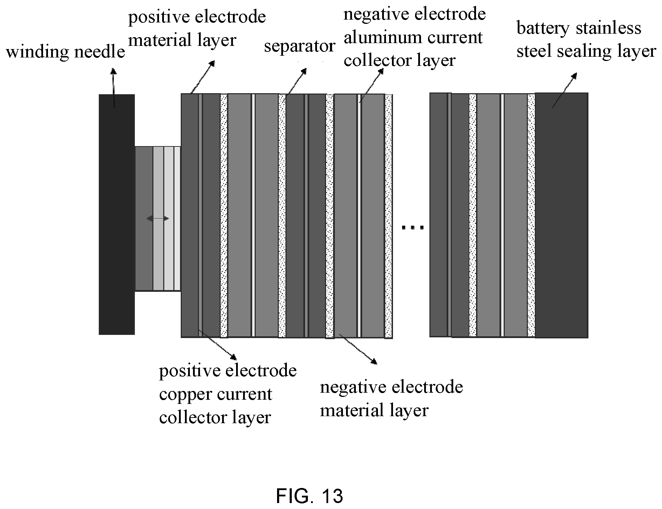

The frequency of the radiated ultrasonic transmitting signals is related to the material thickness. In the thickness vibration mode, the material thickness is about half of the ultrasonic signal wavelength, that is, ${f}_{c} = \frac{λ}{2}$. f_{c} represents the material thickness, and λ represents the wavelength. Therefore, the thinner the piezoelectric material, the higher the frequency of the generated ultrasonic signal, and the higher the detection resolution for detecting abnormal conditions. The design of piezoelectric materials should meet the specific requirements of detecting defect targets. As shown in FIG. 13, the ultrasonic signal needs to penetrate the multi-layer composite material composed of positive pole material layer, current collector layer, separator and negative pole material layer, and the composite material also needs to be infiltrated in the electrolyte.

In an embodiment, the thickness of the piezoelectric material layer is 1 um to 1000 um, so that the frequency of the ultrasonic transmitting signals is designed to be 0.5 MHz to 50 MHz.

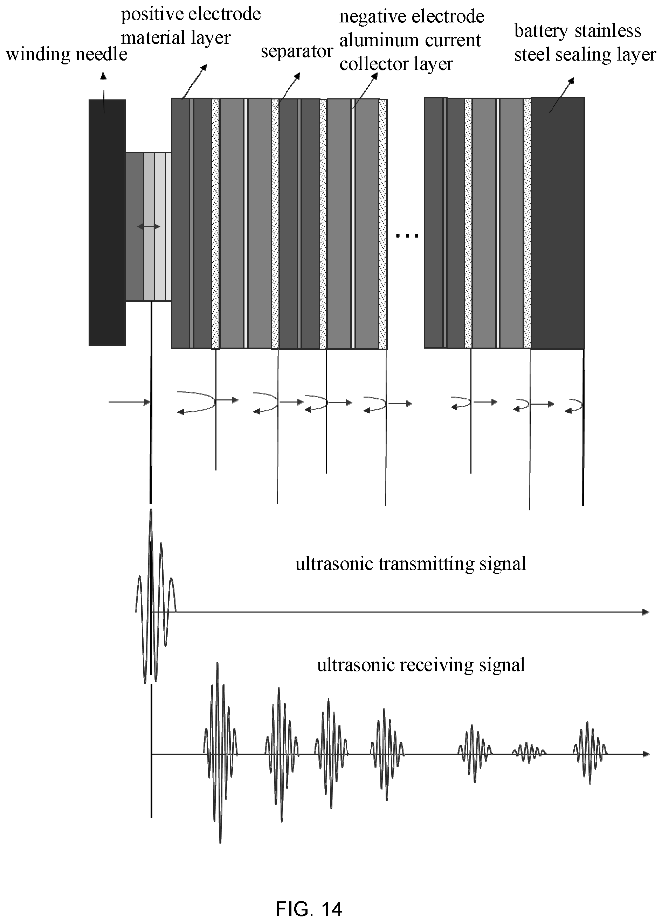

It can be understood that in the embodiment of the present application, ultrasonic reflecting echoes are configured for defect detection and battery in-vivo imaging. According to the ultrasonic propagation theory, for vertically incident sound waves, ultrasonic reflecting echoes are related to the interface acoustic impedance difference, and its reflection coefficient $r = \frac{{Z}_{2} - {Z}_{1}}{{Z}_{1} + {Z}_{2}}$, where Z1 and Z2 are the acoustic impedance values of the materials on both sides of the interface, and the acoustic impedance values are related to the density and Young's modulus of the battery materials. For example, for a 46800 battery, the thickness and acoustic impedance of each part of the material are approximately: positive pole material (about 80 um, about 5 MRely), negative pole material (about 120 um, about 5 MRely), current collector layer (about 10 um, about 15 MRely), copper current collector layer (about 10 um, about 32 MRely), and separator (about 30 um, about 1.8 MRely, after being infiltrated with electrolyte). According to the parameters of each part of the material above, it can be seen that the resolution of the ultrasonic transducer only needs to reach 10 um at most to clearly distinguish each structure inside the battery cell, and the frequency of the ultrasonic transducer needs to be designed to be above 100 MHz accordingly. On the other hand, for the exemplary ultrasonic transmitting signals and ultrasonic receiving signals shown in FIG. 14, high-frequency ultrasonic waves will attenuate rapidly with the propagation distance, and the attenuation coefficient is positively related to the ultrasonic frequency. To balance the detection depth, it is necessary to avoid the design of excessively high ultrasonic frequency.

In this embodiment, since the current collector layer with a relatively low thickness in the battery cell has little impact on the battery safety, to balance the detection depth and resolution, the frequency of the ultrasonic transmitting signals can be designed to be 0.5 MHz to 50 MHz, and the thickness of the piezoelectric material can be designed according to the requirements of the detection frequency, with the thickness of the piezoelectric material designed to be 1 um to 1000 um.

For example, for flexible PVDF-TrFE piezoelectric materials, their load capacity is weak, and the suitable thickness range is 5 um to 300 um. For PZT piezoelectric films or bulk piezoelectric materials, the suitable thickness is 1 um to 1000 um, and other types of materials can be designed and selected according to the frequency constant of the materials. If an ultrasonic transducer of about 10 MHz is designed to detect batteries, the optimized design thickness is about 12 um for PVDF-TrFE and about 100 um for PZT films.

(3) Acoustic matching layer: the function of the acoustic matching layer is to reduce the acoustic impedance difference between the piezoelectric material layer and the detection object, so that more energy is transferred to the medium. The thickness of the acoustic matching layer is generally half of the wavelength, and optional materials such as DAF adhesive film can be selected.

(4) Sealing layer: the main function of the sealing layer is to package and protect the ultrasonic transducer, avoid corrosion of the ultrasonic transducer by electrolyte, and play the roles of waterproof, moisture-proof and sealing protection. The thickness needs to be less than 20 um, and materials such as PVDF film and Parylene film can be selected.

In an embodiment, one end of the battery winding mandrel is led out with a flexible printed circuit board connected to the ultrasonic transducer module, and an intelligent chip is mounted on the flexible printed circuit board. The intelligent chip is powered by the battery cell, and the intelligent chip is used as a driving unit and an imaging unit of the ultrasonic transducer module.

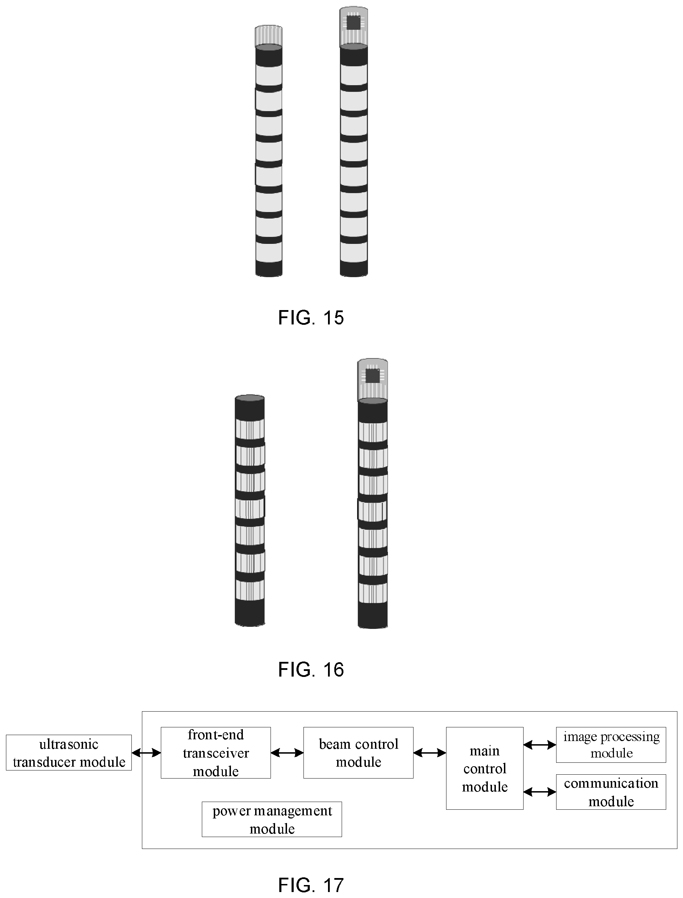

In this embodiment, one end of the battery winding mandrel can use flexible printed circuit (FPC) board to lead out the array element signals of the ultrasonic transducer module, and an intelligent chip with image processing function (such as application specific integrated circuit (ASIC) chip) is mounted on the FPC together. The design that the intelligent chip is exposed outside the battery cell can facilitate signal communication between battery cells, and the battery cell can also directly supply power to the intelligent chip. For example, FIG. 15 shows a schematic diagram of the connection between a battery cell adopting a linear array ultrasonic transducer and an intelligent chip, and FIG. 16 shows a schematic diagram of the connection between a battery cell adopting a planar array ultrasonic transducer and an intelligent chip.

In an embodiment, the intelligent chip includes: a front-end transceiver module configured for exciting the ultrasonic transducer module to transmit the ultrasonic transmitting signals, and receiving and processing the ultrasonic reflecting echoes; a beam control module configured for performing time delay control and forming the ultrasonic reflecting echoes into a gray matrix; an image processing module configured for performing image processing according to the gray matrix and identifying abnormal information in the battery cell; a main control module configured for logically controlling the intelligent chip; a communication module configured for managing the communication interface of the intelligent chip; and a power management module configured for voltage management.

In this embodiment, the driving unit and the imaging unit of the ultrasonic transducer are intelligent chips with small-scale ultrasonic imaging function (such as ASIC chip). As shown in FIG. 17, the functions and characteristics of each module of the intelligent chip can be as follows:
(1) front-end transceiver module: the front-end transceiver module mainly completes the excitation of ultrasonic array elements and the reception of ultrasonic reflecting echoes, and simultaneously performs signal processing processes such as signal amplification, filtering processing and analog-to-digital conversion after signal reception.
(2) Beam control module: the beam control module mainly completes the time delay control of transmission or reception of the ultrasonic array module, realizes the phase control function, and forms the received echo signals into a gray matrix.
(3) Image processing module: the image processing module completes the functions of gray matrix coordinate transformation, pixel enhancement, image comparison, abnormal point calibration, etc., finally identifies the risk battery cell and further defect position, and gives risk level evaluation and early warning according to the image.
(4) Main control module: the main control module performs logic control and comprehensively manages the operation of each functional module.
(5) Communication module: the communication module manages each communication interface, as well as the communication protocols and interfaces between internal modules of the intelligent chip.
(6) Power management module: the power management module manages the voltage collected from the battery cell, performs voltage stabilization and voltage conversion functions, and ensures a stable working voltage for the entire chip.

In summary, the technical solution provided by the embodiment of the present application winds the ultrasonic transducer on the surface of the battery winding mandrel, and winds the battery jelly roll layer on the surface of the ultrasonic transducer, so that the ultrasonic transducer module and the battery can be packaged and used together. Due to the characteristics of nondestructive penetration detection, high resolution, low cost and long service life of ultrasonic waves, the ultrasonic detection technology implemented by the ultrasonic transducer module inside the battery cell can realize real-time in-situ detection on the battery cell in service, so as to avoid risks caused by spontaneous explosion of the battery.

The embodiment of the present application further provides a battery pack capable of monitoring in situ, which includes a plurality of battery cells according to the above embodiments, and the intelligent chip of each battery cell is connected through a communication bus.

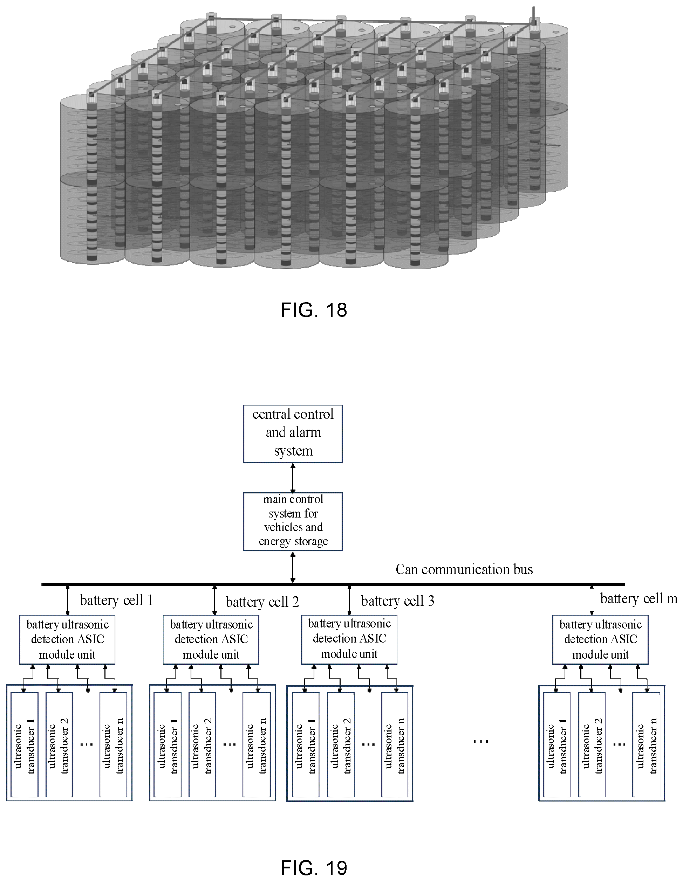

In this embodiment, as shown in FIG. 18, for a battery pack including a plurality of battery cells, the ultrasonic transducer modules in each battery cell can be connected through the communication bus interface on the intelligent chip, so as to transmit the in-situ detection results of each of the ultrasonic transducer modules to the upper computer. The present application does not limit the number of battery cells and the arrangement mode of battery cells in the battery pack.

In summary, the battery pack in this embodiment ensures the overall safety of the battery pack by providing battery cells with real-time in-situ detection function.

The embodiment of the present application further provides an early warning system connected to the battery pack according to the above embodiment and configured for supporting prompting a risk battery cell in the battery pack, and the risk battery cell is a battery cell with abnormal information detected by real-time in-situ detection through ultrasonic detection.

In this embodiment, the ultrasonic transducer module in each battery cell in the battery pack is connected to the intelligent chip through the FPC, and the intelligent chip outside each battery cell can directly upload the detection data to the early warning system through a communication bus (such as controller area network (CAN) communication bus); or as shown in FIG. 19, the intelligent chip first uploads to the main control system of terminals such as automobiles and energy storage stations. The main control system comprehensively processes and determines the reported detection data of each battery cell, transmits the results to the early warning system after comprehensive data processing, and outputs the detection results and early warns through the early warning system, forming a distributed real-time battery monitoring and early warning system.

The early warning mode of the early warning system can adopt one or more of various sensing modes such as voice, vision and touch, which is not limited by the present application.

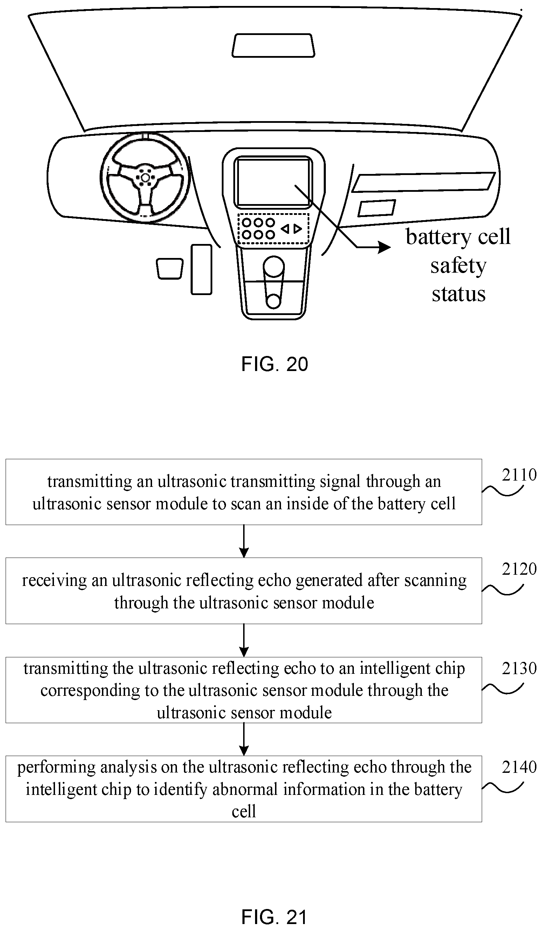

For example, FIG. 20 is a schematic diagram of displaying the prompt of the early warning system on the central control screen of an electric vehicle. Just like other important electric vehicle operation information such as battery power, the battery cell safety status (such as battery risk level and abnormal information) of the battery cell in the electric vehicle can also be obtained through battery ultrasonic detection and informed to the driver in real time, facilitating the driver to use and maintain the battery cell and understand the safety status, and striving for time for escape in case of emergency.

In summary, the early warning system in this embodiment is connected to the battery pack, and the battery pack is provided with battery cells with real-time in-situ detection function, which can prompt the risk battery cells detected in the battery pack through the early warning system, helping users understand the safety status of the battery pack.

The embodiment of the present application further provides a battery monitoring method, which is applied to the battery cell according to the above embodiment. As shown in FIG. 21, the method may include the following steps:
step 2110: transmitting an ultrasonic transmitting signal through an ultrasonic transducer module to scan an inside of the battery cell.

In this embodiment, an ultrasonic transducer module is packaged inside the battery cell. Driven by the intelligent chip corresponding to the ultrasonic transducer module, the ultrasonic transducer module supports transmitting ultrasonic transmitting signals to scan the inside of the battery cell, specifically the battery jelly roll layer.

Step 2120: receiving an ultrasonic reflecting echo generated after scanning through the ultrasonic transducer module.

In this embodiment, the ultrasonic transmitting signals transmitted by the ultrasonic transducer can generate ultrasonic reflecting echoes.

Step 2130: transmitting the ultrasonic reflecting echo to an intelligent chip corresponding to the ultrasonic transducer module through the ultrasonic transducer module.

In this embodiment, after the ultrasonic transducer module receives the ultrasonic reflecting echoes, the ultrasonic reflecting echoes are transmitted to the corresponding intelligent chip.

Step 2140: performing analysis on the ultrasonic reflecting echo through the intelligent chip to identify abnormal information in the battery cell.

In this embodiment, the intelligent chip has an ultrasonic imaging function, which can perform analysis on the ultrasonic reflecting echoes and identify abnormal information in the battery cell.

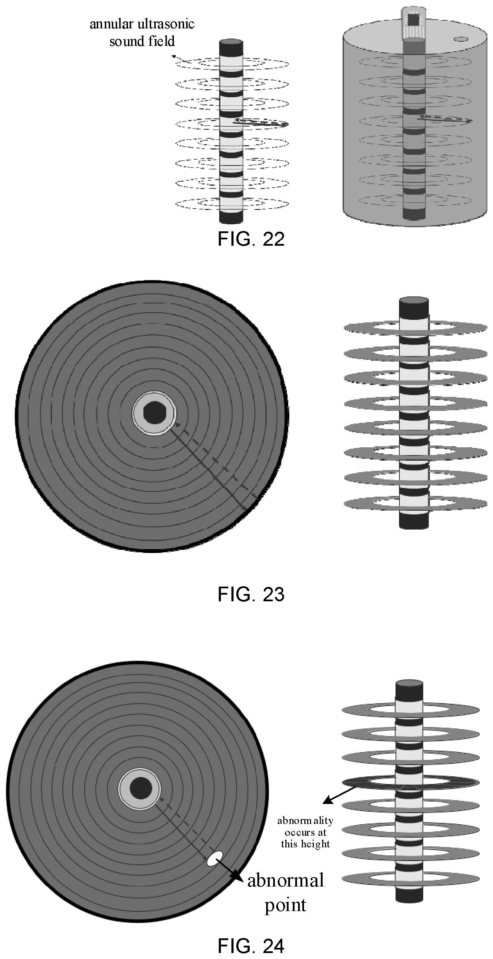

For the ultrasonic transducer module in the form of a linear array, the formed sound field is an annular sound field, which can detect and image the cross section of the battery cell, as shown in FIG. 22. Similarly, the ultrasonic transducer module in the form of a planar array can also form an annular sound field, and the annular sound field can be further divided into fan-shaped regions in different orientations, so as to realize three-dimensional scanning of the battery cell and form a three-dimensional image.

In an embodiment, the abnormal information includes: the height of an abnormal point in the battery cell; and/or the orientation of the abnormal point in the battery cell.

In this embodiment, the intelligent chip can analyze the abnormal points in the battery cell through ultrasonic analysis, and specifically identify the height and/or orientation of the abnormal points. The abnormal point is a position point with abnormality in the battery cell, and the abnormal point may be a bubble point, a lithium metal dendrite point, etc.

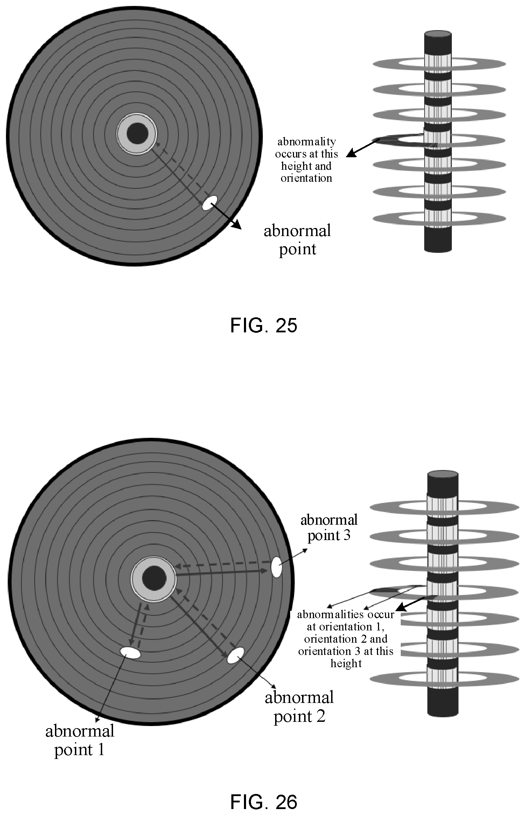

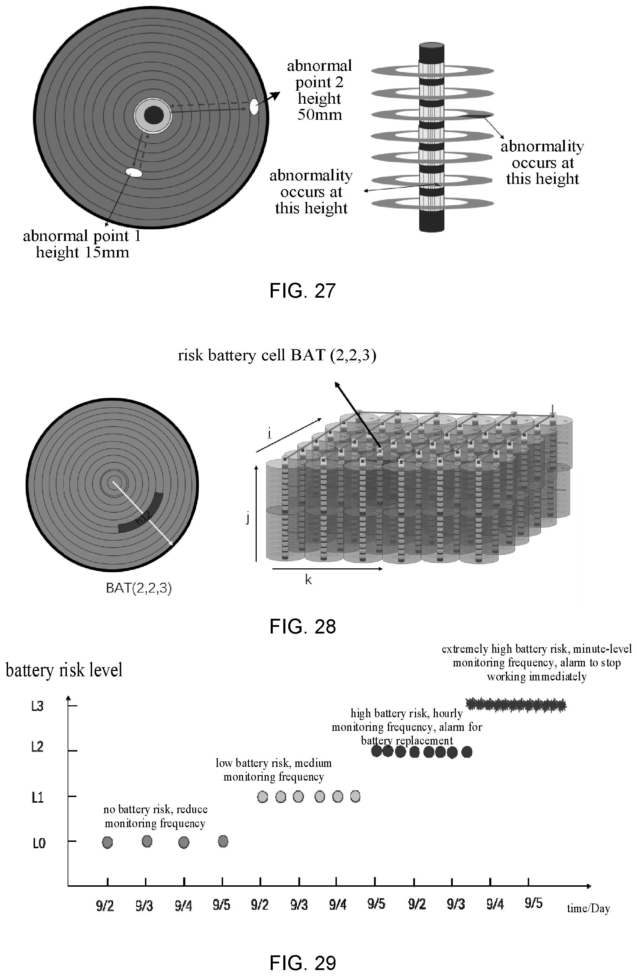

For example, bubbles are low acoustic impedance areas inside the battery cell, because their acoustic impedance is about 0.04 MRaly, and ultrasonic signals will have the strongest reflection signals at the interface. When lithium precipitation occurs in the material of the positive pole, lithium dendrites will be generated, and the acoustic impedance value of metallic lithium is 2.6 MRaly, which is mismatched with the acoustic impedance of the positive pole material, and certain ultrasonic reflecting echoes will also be generated. After the lithium battery winding tape is infiltrated by electrolyte, the electrolyte can act as an acoustic couplant, which is more conducive to the propagation efficiency of ultrasonic signals and improves detection accuracy. The ultrasonic detection results of battery cells are divided into the following common situations:
(1) for the linear array ultrasonic detection result shown in FIG. 23, ultrasonic transmitting signals are transmitted to scan the inside of the battery cell, and no abnormal acoustic reflection area and impedance mismatch area are found.
(2) For the linear array ultrasonic detection result shown in FIG. 24, a single abnormal point appears somewhere in the battery cell, and the intelligent chip identifies and prompts that an abnormality occurs at a certain height of the battery cell.
(3) For the planar array ultrasonic detection result shown in FIG. 25, a single abnormal point appears somewhere in the battery cell, and the intelligent chip identifies and prompts that an abnormality occurs at a certain height and orientation of the battery cell.
(4) For the planar array ultrasonic detection result shown in FIG. 26, a plurality of abnormal points appear at a certain height of the battery cell, and the intelligent chip identifies and prompts that abnormalities occur at multiple orientations at a certain height of the battery.
(5) For the planar array ultrasonic detection result shown in FIG. 27, abnormal points appear at certain heights of the battery at the same time, and the intelligent chip identifies and prompts that abnormalities occur at orientations at certain heights of the battery.

In an embodiment, the intelligent chip corresponds to a location address code. After step 2140, the method further includes: reporting an ultrasonic scanning identification result through the intelligent chip, where the ultrasonic scanning identification result carries the location address code and the abnormal information in the battery cell.

In this embodiment, the intelligent chip on each battery cell has a location address code, and the corresponding battery cell can be located according to the address: when an abnormality of a certain battery cell is detected by ultrasonic scanning, the ultrasonic scanning identification result carrying the location address code and the abnormal information in the battery cell is reported to the early warning system, and the early warning system can locate the specified battery cell through the location address code. For example, for the risk battery cell BAT (2, 2, 3) shown in FIG. 28, the specific abnormal point can be located through the real-time internal scanning of the risk battery cell.

In an embodiment, the battery cell has a battery risk level. The reporting the ultrasonic scanning identification result through the intelligent chip includes: reporting the ultrasonic scanning identification result through the intelligent chip according to the information reporting frequency corresponding to the current battery risk level.

In this embodiment, each battery cell has a battery risk level determined in real time, and the battery risk level is used to indicate the risk degree of the battery cell. The information reporting frequency of the ultrasonic scanning identification result detected by each battery cell is determined according to the battery risk level. Specifically, the higher the risk degree, the higher the information reporting frequency; and the lower the risk degree, the lower the information reporting frequency, so as to reasonably set the information reporting frequency of the ultrasonic scanning identification result.

The battery risk level can be determined based on at least one of the following information: the current number of abnormal points in the battery cell; the current size of abnormal points in the battery cell; the change trend of the number of abnormal points in the battery cell; and the change trend of the size of abnormal points in the battery cell. For example: the more the current number of abnormal points in the battery cell, the larger the current size of abnormal points, the sharp increase in the number of abnormal points, the sharp increase in the size of abnormal points, and the higher the risk degree indicated by the battery risk level; the fewer the current number of abnormal points in the battery cell, the smaller the current size of abnormal points, the sharp decrease in the number of abnormal points, the sharp decrease in the size of abnormal points, and the lower the risk degree indicated by the battery risk level.

For example, the reporting and presentation of the ultrasonic scanning identification result of the battery cell can be reported at different frequencies according to the battery risk level. FIG. 29 shows a coordinated reporting mode: since ultrasonic detection has low power consumption, the intelligent chip can perform random partial area scanning of the battery cell at the second level. If the battery cell is safe and no abnormality is detected for a long time, data reporting can be performed at the day level, such as the battery risk level of L0 level in FIG. 28. When an abnormality of the battery cell is found through conventional scanning, which is in the early stage of development and will not pose a threat to safety in a short time, data can be reported at the day level, and the battery risk level is raised to L1. With the use of the battery cell, the abnormal points will gradually become larger during repeated charge and discharge, threatening the service safety of the battery. If the size of the abnormal points becomes larger to a certain extent that will increase the probability of deflagration of the battery cell, the intelligent chip automatically increases the scanning detection frequency and information reporting frequency of the battery cell, and raises the battery risk level to L2. If the size of the abnormal point reaches the preset proportion range (such as 30% to 80%) of the self-explosion size of the battery cell, the detection frequency is increased to the second level, the battery risk level reaches L3, and the user is informed to stop using and stay away from the risk battery cell in time to protect personal life safety.

It can be understood that the above battery monitoring method and the corresponding early warning system can be widely used in major safety application scenarios of power batteries such as electric vehicles, energy storage power stations and outdoor high-power mobile power supplies. Each battery cell in the battery pack connected to the early warning system adopts the design of packaging the ultrasonic transducer inside the battery cell, and each battery cell adopts a method similar to sonar scanning to detect internal defects of the battery cell, timely report the defect level and remind emergency escape.

In summary, in the battery monitoring method in this embodiment, ultrasonic transmitting signals are transmitted through the ultrasonic transducer module to scan the inside of the battery cell. The ultrasonic reflecting echoes generated after scanning are received through the ultrasonic transducer module. The ultrasonic reflecting echoes are transmitted to the intelligent chip corresponding to the ultrasonic transducer module through the ultrasonic transducer module. Imaging analysis is performed on the ultrasonic reflecting echoes through the intelligent chip to identify abnormal information in the battery cell. Thus, real-time in-situ detection is performed on the battery cell, the working state of the battery cell is monitored in real time, and the safety is improved.

All the above technical solutions can be combined arbitrarily to form embodiments of the present application, that is, any multiple embodiments can be combined to meet the requirements of different application scenarios, all of which are within the scope of the present application, and will not be repeated here.

It should be noted that the above descriptions are only embodiments of the present application and are not intended to limit the present application. Any modifications, equivalent replacements, improvements, etc. made within the spirit and principle of the present application shall be included in the scope of the present application.

## Claims

1. A battery cell capable of monitoring in situ, **characterized by** comprising a protective shell and an internal component provided inside the protective shell, wherein the internal component comprises:
a battery winding mandrel;
an ultrasonic transducer module adhered to a surface of the battery winding mandrel by winding; and
a battery jelly roll layer adhered to a surface of the ultrasonic transducer module by winding;
wherein the ultrasonic transducer module is configured for transmitting an ultrasonic transmitting signal and receiving an ultrasonic reflecting echo to perform ultrasonic detection, so as to conduct real-time in-situ detection on the battery cell through the ultrasonic detection.

2. The battery cell according to claim 1, wherein the ultrasonic transducer module comprises a plurality of ultrasonic transducers forming a multi-channel array structure.

3. The battery cell according to claim 2, wherein the array structure comprises: a linear array structure or a planar array structure.

4. The battery cell according to claim 1, wherein the ultrasonic transducer module comprises a single ultrasonic transducer.

5. The battery cell according to claim 2 or 4, wherein the ultrasonic transducer comprises following layers connected in sequence from bottom to top:
a base layer configured for being attached to the surface of the battery winding mandrel and carrying a piezoelectric material layer;
the piezoelectric material layer configured for radiating the ultrasonic transmitting signal outwards and receiving the ultrasonic reflecting echo;
an acoustic matching layer configured for reducing an acoustic impedance difference between the piezoelectric material layer and the battery jelly roll layer; and
a sealing layer configured for packaging and protecting the ultrasonic transducer.

6. The battery cell according to claim 5, wherein a thickness of the piezoelectric material layer is 1 um to 1000 um, so that a frequency of the ultrasonic transmitting signal is 0.5 MHz to 50 MHz.

7. The battery cell according to claim 1, wherein one end of the battery winding mandrel is led out with a flexible printed circuit board connected to the ultrasonic transducer module, an intelligent chip is mounted on the flexible printed circuit board and is powered by the battery cell, and the intelligent chip is configured as a driving unit and an imaging unit of the ultrasonic transducer module.

8. The battery cell according to claim 7, wherein the intelligent chip comprises:
a front-end transceiver module configured for exciting the ultrasonic transducer module to transmit the ultrasonic transmitting signal, and receiving and processing the ultrasonic reflecting echo;
a beam control module configured for performing time delay control and forming the ultrasonic reflecting echo into a gray matrix;
an image processing module configured for performing image processing according to the gray matrix and identifying abnormal information in the battery cell;
a main control module configured for logically controlling the intelligent chip;
a communication module configured for managing a communication interface of the intelligent chip; and
a power management module configured for voltage management.

9. The battery cell according to claim 1, wherein a winding form corresponding to the winding comprises:
cylindrical; or
cubical; or
oval.

10. A battery pack capable of monitoring in situ, **characterized by** comprising a plurality of battery cells according to any one of claims 1 to 9, wherein intelligent chips of each of the plurality of battery cells are connected through a communication bus.

11. An early warning system, **characterized in that** the early warning system is connected to the battery pack according to claim 10, and the early warning system is configured for supporting prompting a risk battery cell in the battery pack, and the risk battery cell is a battery cell with abnormal information detected by real-time in-situ detection through ultrasonic detection.

12. A battery monitoring method, **characterized in that** the battery monitoring method is applied to the battery cell according to any one of claims 1 to 9, and the method comprises:
transmitting an ultrasonic transmitting signal through an ultrasonic transducer module to scan an inside of the battery cell;
receiving an ultrasonic reflecting echo generated after scanning through the ultrasonic transducer module;
transmitting the ultrasonic reflecting echo to an intelligent chip corresponding to the ultrasonic transducer module through the ultrasonic transducer module; and
performing analysis on the ultrasonic reflecting echo through the intelligent chip to identify abnormal information in the battery cell.

13. The method according to claim 12, wherein the abnormal information comprises:
a height of an abnormal point in the battery cell; and/or
an orientation of the abnormal point in the battery cell.

14. The method according to claim 12, wherein the intelligent chip is correspondingly provided with a location address code; and
the method further comprises:
reporting an ultrasonic scanning identification result through the intelligent chip, wherein the ultrasonic scanning identification result carries a location address code and the abnormal information in the battery cell.

15. The method according to claim 14, wherein the battery cell has a battery risk level;
the reporting the ultrasonic scanning identification result through the intelligent chip comprises:
reporting the ultrasonic scanning identification result through the intelligent chip according to an information reporting frequency corresponding to a current battery risk level.

16. The method according to claim 15, wherein the battery risk level is determined based on at least one of following information:
a current number of abnormal points in the battery cell;
a current size of abnormal points in the battery cell;
a change trend of a number of abnormal points in the battery cell; and
a change trend of a size of abnormal points in the battery cell.
